Europäisches Patentamt

European Patent Office

Office européen des brevets

(11) Publication number: **0 079 682**
**B1**

(12) **EUROPEAN PATENT SPECIFICATION**

(45) Date of publication of patent specification: **30.07.86**

(51) Int. Cl.⁴: **B 29 C 49/16**

(21) Application number: **82305485.3**

(22) Date of filing: **14.10.82**

(54) **Method of producing plastics material containers.**

(30) Priority: **16.10.81 GB 8131315**

(43) Date of publication of application:
**25.05.83 Bulletin 83/21**

(45) Publication of the grant of the patent:
**30.07.86 Bulletin 86/31**

(84) Designated Contracting States:
**AT BE CH DE FR GB IT LI LU NL SE**

(56) References cited:
EP-A-0 038 371
DE-A-1 604 444
DE-A-1 911 758
DE-A-2 428 578
DE-B-1 273 792
FR-A-1 412 049
US-A-2 854 694
US-A-2 917 783
US-A-3 178 771
US-A-3 244 780
US-A-3 331 422
US-A-3 441 983
US-A-3 450 807

(73) Proprietor: **Plastona (John Waddington)
Limited
Wakefield Road
Leeds LS10 3TP (GB)**

(72) Inventor: **Ward, Peter
2, The Croft
Oulton Leeds, LS26 8DG (GB)**

(74) Representative: **Denmark, James
c/o Bailey Walsh & Co. 5 York Place
Leeds LS1 2SD Yorkshire (GB)**

(56) References cited:
**US-A-3 528 865
US-A-3 737 494
US-A-3 814 784**

Courier Press, Leamington Spa, England.

## Description

This invention relates to the production of plastics material containers from plastics material sheet. The containers may take any desired shape, but each will comprise a base and a wall, and whilst the present invention is such as to produce containers of a type suitable for holding contents such as carbonated beverages, which give rise to internal pressure, the containers can be used for any purpose as elected by the user.

The most common form of container to which the present invention relates can best be described as a cup, and whilst the following will refer to cups in the specific, it is not intended that the invention should be restricted in any way solely to containers which are best described as cups.

It has been proposed previously to thermoform cups which are to be filled with carbonated beverage and then sealed by means of a lid, but it has been found that such cups suffer from certain disadvantages. Thus, there is a tendency for the cups when subjected to excessive internal pressure to distend, split, crack or in severe cases, to burst. When there is failure it usually takes place in the form of cracking in the region of the container rim where it is sealed to the lid, but sometimes it manifests itself in axial splits extending in a top to bottom direction of the wall. Furthermore, when the cup distends as opposed to leaking, the headspace is increased, and carbon dioxide comes out of solution, lowering the carbonation level of the beverage, making it less palatable. These disadvantages and failures, it is believed, are attributable to the lack of hoop orientation in the cup. When a plastics cup is thermoformed conventionally the stretching of the heated sheet material into the cavity into which the cup is formed, causes axial orientation of the sheet material, but gives rise to very little hoop or circumferential orientation especially in the region of the rim, and consequently the cup is much weaker in hoop than in axial tensile strength.

The present invention may be used for producing plastic cups having more hoop orientation than they have if thermoformed by known methods, especially in the upper wall and rim region.

Traditionally, to bi-axially orientate thermoplastic sheet material, it is usual to stretch the sheet in two directions to produce the orientation whilst at temperature range known as the high orientation range which is generally not much in excess of its softening point. This technique not only is expensive, but produces orientation which in subsequent heating prior to thermoforming may be dissipated.

In thermoforming containers, some attempt has been made to cause bi-axial orientation, at least to a limited extent, by displacing the heated sheet, whilst in the thermoforming machine, away from the mould cavity, and then by displacing the blown heated sheet into the cavity by means of a plug, prior to the final shaping of the heated sheet to the mould cavity profile. In this method of which a typical example is disclosed in U.S. Patent No. 3,814,784 the sheet is heated to a temperature above the high orientation temperature range (the high orientation temperature range is that range in which the material is stretched high orientation results, as described in said U.S. Patent No. 3,814,784) so that the heated sheet can be displaced away from the mould cavity by the application of a vacuum to one side of the sheet. However, in order to provide hoop orientation in the finished article, the sheet may be held to the plug whilst in the mould cavity until the sheet cools to a temperature within the high orientation temperature range. Whilst this method has some merit, it has a drawback that cycle time is slow and it is difficult to achieve uniformity of result, because it is difficult to achieve a uniformity of stretching the sheet when the sheet is in the rubbery flow condition.

It also is known from German Patent specification 1,273,792 to stretch synthetic plastics sheet material to be formed in a container mould, in a direction initially away from a mould into a chamber and onto the chamber surface, in order to orientate the plastics material prior to the insertion of the material onto the mould using a plug. In this known method, a relatively thick blank of plastics material sheet, which is taken directly from the extruder so that it retains its heat, and is in a condition suitable for expansion, so that in fact the blank material is at a temperature at which the material can be stretched readily from the relatively thick condition into a balloon in the said chamber. No further heat is added to the sheet in being deflected from the chamber into the mould cavity and the subsequent shaping of the sheet to the mould cavity surface. However only limited bi-axial orientation results by this method because the sheet is thermoformed at a relatively high temperature.

The present invention resides in that initial stretching of the material takes place whilst the sheet is in the mould and the initial stretching is carried out whilst the sheet is at a temperature within the high orientation temperature range, using much higher pressure differentials than have been used heretofore e.g. of the order of 207 kPa and upwards (typically 413/482 kPa). The pressure differential will depend upon the thickness of the sheet involved, but the pressures indicated above are typical for sheets which are formed into container for holding quantities of carbonated beverages; the important feature of the invention being that, as distinguished from all prior art methods, the pre-stretching is carried out whilst the material is relatively cool (in the high orientation temperature range).

The present invention comprises a method of producing plastics material containers from plastics material sheet, wherein the sheet is shaped in a thermoforming apparatus from a flat condition to the shape of the container by being thermoformed in an appropriate mould cavity, the sheet being pre-stretched by being billowed away from the mould cavity prior to being displaced thereinto, characterised in that the sheet is maintained at a temperature within the high orientation temperature range as it is billowed and a high fluid pressure differential is used to perform said billowing.

The said sheet is preferably displaced against a surface which defines a chamber into which the sheet is displaced.

In practice, a multiplicity of containers may be formed simultaneously by the method as aforesaid.

The process will preferably be under temperature control, the temperature control being related to the orientation temperature of the sheet material being thermoformed. It is known that plastics material sheets which are susceptible to orientation have a high orientation temperature range, which typically for polyester sheet may be of the order of 90°C—110°C, but this may be, and usually is (as explained herein) below the temperature range which has in the past been used and currently is used for thermoforming. The sheet to be thermoformed will therefore be relatively cold and therefore stiffer as compared to sheet heated for conventional thermoforming. Orientation is enhanced when the material is stretched whilst in this condition, but higher fluid pressures and plug forces are needed to blow and shape the material.

In accordance with a preferred feature of the invention, the base of the cavity is defined by a displaceable clamp member which can move upwardly to engage the sheet on the opposite side of a sheet displacement plug, and for the plug and clamp member to move as a unit taking the material with it, to prevent flow of the material from between the plug and clamp as it is desired that the material be so displaced into the mould cavity against the high fluid pressure.

It should be noted at this point that the sheet may in fact be a laminate of two or more different thermoformable sheet materials, which may or may not be connected by thermoplastic adhesive, and which may be produced by a coextrusion or sequential lamination, although normally a single homogenous sheet will be involved. The sheet may be coated or sprayed to improve its gas barrier properties.

By pre-shaping the sheet material to the chamber surface, a predetermined amount of circumferential (and co-incidentally bi-axial) or hoop stress can be imparted to at least the material which will form the upper wall and rim of the container prior to the formation of the material into the container. The displacement of the material into the cavity using a plug imparts axial orientation to the material. By selecting the temperature of the sheet and the shape of the chamber, the hoop orientation in various parts of the cup may be optimised. Also, by using a chamber which is of a predetermined shape and, which is temperature controlled, uniform results of orientation and thickness can be achieved on a reliable basis from mould to mould and in mass production.

The chamber surface may be for example hemispherical with a wall region of the chamber surface being defined by the end of the plug which is displaceable relative to the means defining the remainder of the chamber in order to move the shaped plastics material into the cavity, but a preferred shape is one in which an outer annular region is displaced into an annular chamber, the displacement of the centre portion being hindered or limited.

The means defining the chamber and the mould part defining the cavity are movable relatively together thereby to clamp the sheet material in an annular region surrounding a central portion, which portion is in fact shaped into the container as described.

An embodiment of the method according to the present invention will now be described, by way of example, with reference to the accompanying drawings, wherein:

Figs. 1 to 5 show in sectional elevation the steps involved in the thermoforming of a single container according to the embodiment of the invention;

Fig. 6 shows a container produced by the method illustrated in Figs. 1 to 5; and

Fig. 7 shows the top of a container when sealed by means of a metal lid.

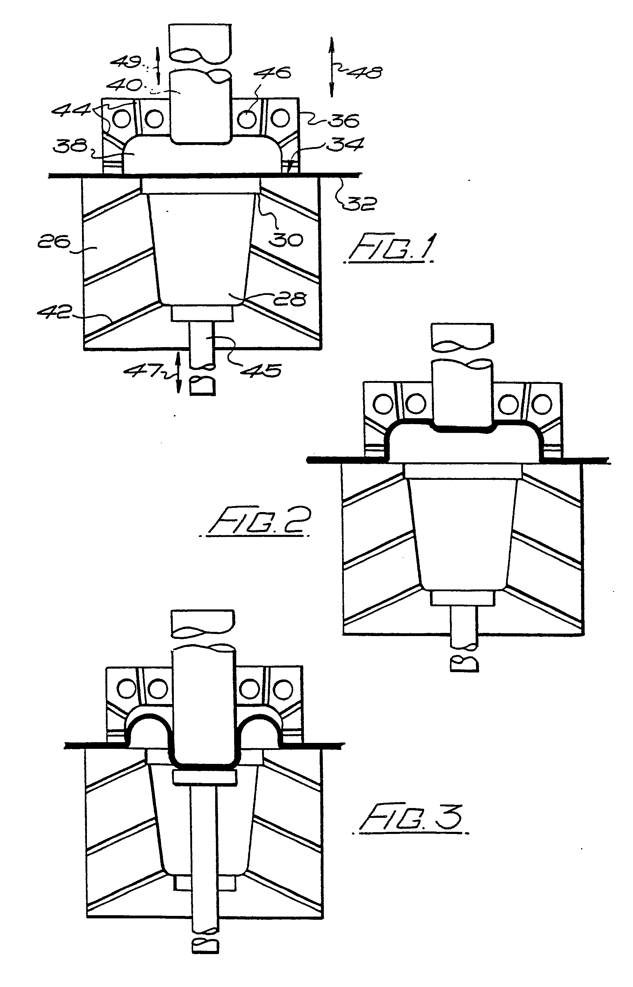

Referring to the drawings, it is useful firstly to refer to Fig. 6 which shows the form of container (cup) produced according to the method illustrated by Figs. 1 to 5. The cup comprises a base 10 of circular configuration, and a frusto-conical wall 12 which leads to an outwardly turned flange 14. The shape of container illustrated in Fig. 6 is well known, but the present invention seeks to ensure that the container will have as much hoop or circumferential orientation (indicated by arrows 16) at least in the upper wall and flange regions. Axial orientation (indicated by arrow 18), is achieved readily by the nature of the forming process as will be explained. It is of course desirable that the container should be bi-axially orientated, but heretofore it has been difficult to achieve hoop orientation. Fig. 7 shows that when the container has been filled with carbonated beverage and is sealed by means of a metal lid 22, the flange 20 is coiled and clinched with the edge 24 of the lid 22. In this particular article, it is because that the flange 20 is coiled and clinched in this fashion that it is desirable to have the hoop orientation 16 in the flange 14.

The method of the embodiment illustrated in Figs. 1 to 5 achieves in a plastic cup more hoop orientation 16 at least in the region of the upper wall and rim flange 14.

Referring to Fig. 1, a female mould part 26 has a cavity 28 of frusto-conical form, leading to a stepped shoulder 30, such shoulder being for defining flange 14. A synthetic plastics sheet 32 to be thermoformed is clamped between the female mould part 26 in an annular region 34, by means of a clamping part 36 having a cylindrical interior chamber 38. The shoulder 30 also serves to keep the said sheet 32 out of contact with relatively cool mould part 26 so that there is chilling of the material 32 only in the region 34 where it is clamped. The chamber 38 is coaxial with the cavity 28, and a central region thereof is defined by the end of a plug 40. The female mould part 26 has pressure, vent and vacuum passages 42, and the part 36 also has similar passages 44. Part of the base of cavity 28 is defined by a movable clamp member 45 which also serves as the moulding ejector, and member 45 is movable up or down selectively as indicated by arrow 47. Reference numeral 46 indicates heating coils or passages for passing hot fluent medium through the mould part 36 in order to keep the same (and plug 40) at a predetermined and thermostatically controlled temperature in the high orientation temperature range of the sheet 32. The mould part 36 is movable as indicated by arrow 48 into the clamping position shown in Fig. 1, and the plug 40 is movable as indicated by arrow 49, relative to the part 36 as will be explained.

It should also be mentioned that Fig. 1 shows only a single cavity. In practice the thermoforming apparatus will have a multiplicity of cavities, and a multiplicity of containers will be simultaneously thermoformed in the manner to be described. The containers may be formed in reciprocable platen or rotary platen machines.

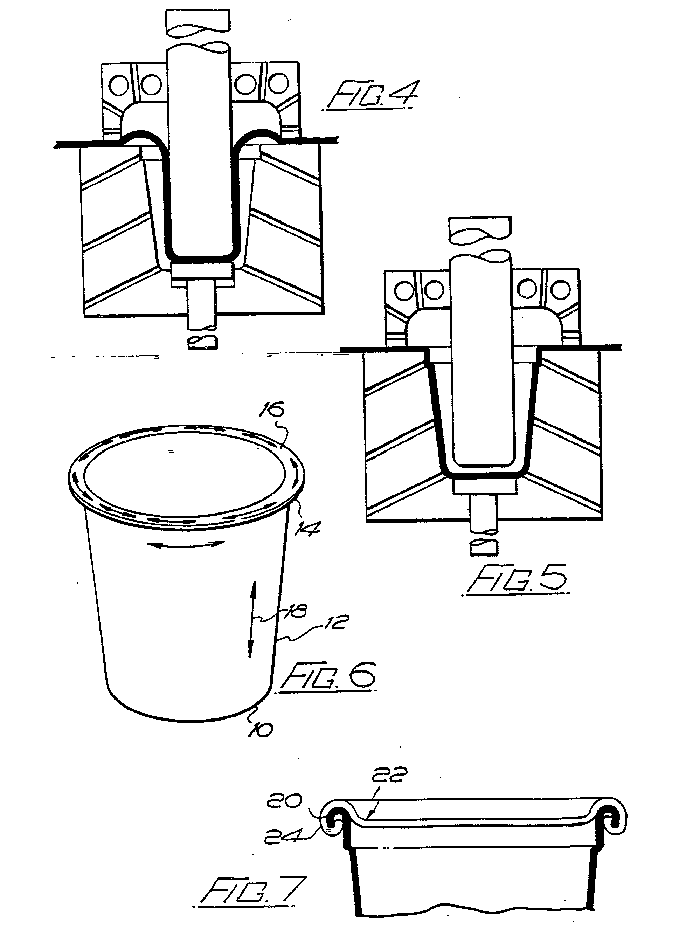

When the sheet 32 is heated to a temperature in the high orientation temperature range and is in the position shown it can be shaped in the manner now to be described. As mentioned herein, the sheet will be relatively stiff, because it will be cooler than the usual thermoforming temperature. It is kept at this temperature so that there will be maximum orientation imparted thereto. Firstly, a high pressure differential between the underside and topside of the sheet portion 50 is created so that the sheet is displaced more in the nature of cold working of same and as the sheet will be relatively stiff and untractable until it deflects to the position shown in Fig. 2 in which it lies against the surface defining cavity 38. The high pressure differential is achieved by applying a vacuum to passages 44, and applying a fluid pressure in cavity 28. As an alternative to applying a vacuum in passages 44, they may simply be vented to allow the escape of air as the sheet is deflected to the position shown in Fig. 2 but a correspondingly higher positive pressure on the underside of the sheet will be required. In any event higher pressures than usual will be employed because of the stiffness of the sheet and in fact with polyester sheet of a thickness of 1250 microns and at a temperature of 100°C, a positive pressure differential of at least 482 kPa is required to shape the sheet.

It is an important preferred feature that the sheet should deflect to a predetermined position and shape, because then it is possible to control the thickness of the sheet when it is in the condition shown in Fig. 2, in order to achieve a predetermined circumferential or hoop orientation. In proceeding from a flat circular disc to a cylindrical cap shape of the same diameter, in fact the material is orientated in two orthogonal directions which correspond to the axial and circumferential directions in the finished container, and the orientation in each direction is considerably improved. By outwardly profiling the dimensions of the chamber 38 the circumferential orientation can be further improved. The surface against which the sheet is initially deflected need not be complete as indicated by cavity 38, but instead the surface may engage only a part of the sheet, the remainder being free, but so as to impart the said hoop orientation. Additionally, as well as by varying the shape of the chamber, it is possible to control and vary the orientation imparted to the sheet material by a number of means used singly or in combination and especially the following:—

i) by varying the shape of the plug;

ii) by varying the position at which the clamp member engages the plug;

iii) by controlling the pressure of the fluid which displaces the material from the plug onto the mould cavity and the timing of the application of such pressure;

iv) by controlling the back pressure, and the tuning of its variation, during the interval from the commencement of downward movement of the plug until the material is shaped in the mould cavity to final form.

In the next stage of operation, the plug 40 is deflected downwards as shown in Fig. 3 (against the said high pressure differential, which is maintained), relative to the mould part 36, taking with it the centre region of the portion 50, also as shown in Fig. 3, and the clamp member 45 is moved upwards until it engages the sheet material to the underside of the plug 40, and with the plug 40, clamps the material. The clamp 45 can engage the sheet 32 at any position of downward travel of the plug 40, but normally the clamp 45 will go no higher than the plane defined by the sheet 32 when in the Figure 1 position. The plug and member 45 move down as a unit 40, physically pulling the material into the cavity 28 with the high pressure differential causing the material to lie against the outside of the plug, and the portion 50 being retained on the end of plug 40 by clamp member 45 until the position shown in Fig. 4 is reached which is the terminal position of the plug 40. During this movement the material on the plug wall has in fact been axially stretched to produce the orientation 18 as shown in Fig. 4. During the movement of the plug 40 and member 45 between the Figs. 2 and 4 positions, the high pressure differential may be controlled so as not to unduly diminish any induced hoop orientation in any region of the plastics sheet. The clamp member 45 next moves back to its initial position shown in Figs. 1 and 2.

In the final stage of formation as shown in Fig. 5, a reverse pressure differential is applied which causes the material to move to the profile of the cavreto in the lower regions of the container. This reverse pressure differential must be sufficiently high to stretch the sheet which is still intractable.

As the material at the top of the container is displaced into shoulder 30 it is further circumferentially orientated.

Reverse pressure is achieved by applying fluid under pressure through passages 44, and/or applying a vacuum through passages 42. In an alternative arrangement pressure fluid is applied to passages 44, and passages 42 simply act as vents.

By the method of the invention containers having more hoop orientation in the upper wall and rim flange can be produced.

Instead of the shape of the chamber 38 being partly defined by a plug 40, it may be arranged so that part 36 is in two sections which totally define chamber 38 and which can be displaced for example by pivoting to enable the plunger to pass therebetween and displace the sheet material from the position shown in Fig. 1.

In the thermoforming process described, the flange area of the container is stretched circumferentially, to increase the hoop orientation of the flange, as described and the temperature of the part 36 is maintained by thermostatic means of suitable construction so as to preserve the sheet material at the desirable orientation temperature.

The part 36 may be constructed of non-heat conducting material, and normally will be of metal.

The plastic sheet 32 will normally be preheated before being passed to the thermoforming apparatus, and this heating may be carried out using any of the methods described in British Patent Specifications Nos. 1505820, 1495691 and 1521037, and the process of the invention can be used in conjunction with the process described in European patent application No. 0 038 371.

Any suitable plastics material may be used in this process, but preferably a plastics material whose properties such as strength, environmental stress characteristics, creep, gas impermeability are particularly sensitive to orientation, can be used with particular advantage. Such materials includes thermoplastic polyester resin and its copolymers, polystyrene and its copolymers, polyacrylonitrile and its copolymers, P.V.C. and its copolymers, polypropylene and high density polyethylene and their copolymers.

The method of the invention enables the forming of containers at high speeds and yields products having more hoop orientation therein, particularly in the region of the upper wall and flange giving the containers a higher resistance to distension (or creep) and to cracking and splitting, especially in the region of the rim.

## Claims

1. A method of producing plastics material containers from plastics material sheet (32), wherein the sheet is shaped in a thermoforming apparatus from a flat condition to the shape of the containers by being thermoformed in an appropriate mould cavity (28), the sheet being prestretched by being billowed away from the mould cavity prior to being displaced thereinto, characterised in that the sheet is maintained at a temperature within the high orientation temperature range as it is billowed and a high fluid pressure differential is used to perform said billowing.

2. A method according to Claim 1 wherein the heated sheet (32) is first displaced away from the mould cavity (28) onto a chamber surface (38), characterised in that such surface is maintained at a temperature within a high orientation temperature range.

3. A method according to Claim 1 or 2, wherein the sheet material (32) is displaced against a high back fluid pressure into the mould cavity (28) by means of or with the assistance of a plug (40) which moves into the mould cavity (28), characterised in that a means is provided for restraining the plug from puncturing the sheet material displaced thereby or with the assistance thereof.

4. A method according to Claim 3, characterised by a clamping member (45) which clamps the sheet material (32) to the said plug (40) prior to or during the movement of the plug into the mould cavity in order physically to displace the sheet material to the mould cavity and to trap material between the plug and clamp member, the said high pressure differential being maintained whilst the sheet is so displaced in the mould cavity.

5. A method according to Claim 4, characterised in that the back pressure differential against which the sheet material (32) is displaced into the mould cavity (28) is controlled so as to control said displacement.

6. A method according to any preceding claim, characterised in that the plastic sheet material (32) is polyethylene terythalate of which the high orientation temperature range is 90°C to 110°C.

7. A method according to any preceding claim, characterised in that the plastics sheet material (32), is clamped in a region around but displaced from the top of the mould cavity.

## Patentansprüche

1. Verfahren zur Herstellung von Kunststoffbehältern aus Kunststoffbahnen bzw. -platten, wobei die Bahn bzw. Platte in einer Warmformvorrichtung aus dem flachen Zustand zu der Form der Behälter dadurch geformt wird, daß sie in einem geeigneten Hohlraum (28) der Form warmgeformt wird, wobei die Bahn bzw. Platte dadurch vorgereckt wird, daß sie von dem Hohlraum der Form fortgeschwellt wird, bevor sie in den Hohlraum verschoben wird, dadurch gekennzeichnet, daß die Bahn oder Platte auf einer Temperatur innerhalb des hohen Recktemperaturbereiches gehalten wird, wenn sie geschwellt wird und daß ein hohes Flüssigkeitsdruckdifferenzial angewandt wird, um das Schwellen durchzuführen.

2. Verfahren nach Anspruch 1 wobei die erhitzte Bahn bzw. Platte (32) zuerst vom Hohlraum (28) der Form auf einen Kammeroberfläche (38) verschoben wird, dadurch gekennzeichnet, daß eine solche Oberfläche auf einer Temperatur innerhalb eines hohen Recktemperaturbereiches gehalten wird.

3. Verfahren nach Anspruch 1 oder 2, wobei das bahnförmige bzw. plattenförmige Material (32) gegen einen hohen Flüssigkeitsgegendruck in den Hohlraum (28) der Form mittels oder unter Unterstützung eines Matrizenteils (40), das sich in den Hohlraum (28) der Form bewegt, verschoben wird, dadurch gekennzeichnet, daß eine Vorrichtung vorgesehen ist, die das Matrizenteil hindert, das bahn- bzw. plattenförmige Material, das hierdurch oder mit seiner Hilfe verschoben wird, zu durchstechen.

4. Verfahren nach Anspruch 3, gekennzeichnet durch eine Klemmteil (45), das das bahn- oder plattenförmige Material (32) vor oder während der Bewegung des Matrizenteils in den Hohlraum der Form an das Matrizenteil (40) klemmt, um das bahn- bzw. plattenförmige Material nach dem Hohlraum der Form zu verschieben und Material zwischen dem Matrizenteil und dem Klemmteil einzuschließen, wobei das Hochdruckdifferenzial aufrecht erhalten wird, während die Bahn bzw. Platte so in den Hohlraum der Form verschoben wird.

5. Verfahren nach Anspruch 4, dadurch gekennzeichnet, daß das Gegendruckdifferenzial, gegen das das bahn- bzw. plattenförmige Material (32) in den Hohlraum (28) der Form verschoben wird, so gesteuert wird, daß es die Verschiebung steuert.

6. Verfahren nach einem der Ansprüche 1 bis 5, dadurch gekennzeichnet, daß das bahn- bzw. plattenförmige Kunststoffmaterial (32) Polyethylenterythalat ist, bei dem der hohe Recktemperaturbereich 90°C bis 110°C beträgt.

7. Verfahren nach einem der Ansprüche 1 bis 6, dadurch gekennzeichnet, daß das bahn- bzw. plattenförmige Kunststoffmaterial (32) in einem Bereich um die Spitze des Hohlraums der Form festgeklemmt, aber von der Spitze des Hohlraums der Form verschoben wird.

**Revendications**

1. Procédé de production de conteneurs en matière plastique à partir d'une feuille (32) de matière plastique, dans lequel la feuille est formée dans un appareil de thermoformage à partir d'une condition plate à la forme des conteneurs en étant thermoformée dans une cavité (28) de moule appropriée, la feuille étant pré-étirée en étant ondoyée loin de la cavité de moule avant d'y être déplacée, caractérisé en ce que la feuille est maintenue à une température à l'intérieur du domaine de température d'orientation élevée alors qu'elle est ondoyée et un différentiel de pression de fluide élevée est utilisé pour réaliser ladite ondulation.

2. Procédé selon la revendication 1, dans lequel la feuille chauffée (32) est tout d'abord déplacée loin de la cavité de moule (28) sur une surface de chambre (38), caractérisé en ce que ladite surface est maintenue à une température à l'intérieur d'un domaine de température d'orientation élevée.

3. Procédé selon la revendication 1 ou 2, dans lequel la matière en feuille (32) est déplacée contre une pression de fluide inverse élevée dans la cavité de moule (28) au moyen ou à l'aide d'un tampon (40) qui se déplace dans la cavité de moule (28), caractérisé en ce que l'on prévoit des moyens pour empêcher le tampon de perforer la matière en feuille déplacée par celui-ci ou à l'aide de celui-ci.

4. Procédé selon la revendication 3, caractérisé par un organe de serrage (45) qui serre la matière en feuille (32) sur ledit tampon (40) avant ou pendant le mouvement du tampon dans la cavité de moule de façon à déplacer physiquement la matière en feuille vers la cavité de moule et de piéger la matière entre le tampon et l'organe de serrage, ledit différentiel de pression élevée étant maintenu pendant que la feuille est ainsi déplacée dans la cavité de moule.

5. Procédé selon la revendication 4, caractérisé en ce que le différentiel de pression inverse contre lequel la matière en feuille (32) est déplacée dans la cavité de moule (28) est contrôlée de façon à contrôler ledit déplacement.

6. Procédé selon l'une quelconque des revendications précédentes, caractérisé en ce que la matière plastique en feuille (32) est du polyéthylène téréphtalate dont le domaine de température d'orientation élevée est compris entre 90°C et 110°C.

7. Procédé selon l'une quelconque des revendications précédentes, caractérisé en ce que la matière plastique en feuille (32) est serrée dans une région autour mais espacée de l'extrémité supérieure de la cavité de moule.

0 079 682

*FIG.1*

*FIG.2*

*FIG.3*

1

0 079 682

FIG.4

FIG.5

FIG.6

16

14

18

12

10

FIG.7

22

20

24

2